# EUROPEAN PATENT APPLICATION

(11) **EP 0 714 949 A2**
(43) Date of publication of application: **05.06.1996**
(21) Application number: 95308181.7
(22) Date of filing: 15.11.1995
(51) Int. Cl.: C08L 69/00, C08F 279/02, C08F 291/02, C08F 2/44, B29C 45/00

(54) **Processes, thermoplastic compositions and emulsion graft copolymer utilizing a polyacid**

(30) Priority: 02.12.1994 US 349099
(71) Applicant: GENERAL ELECTRIC COMPANY, Schenectady, NY 12345 (US)
(72) Inventor: Jalbert, Ronald Louis, Parkersburg, West Virginia 26101 (US); Vilasagar, Shripathy, Parkersburg, West Virginia 26101 (US); Peascoe, Warren Joseph, Vienna, West Virginia 26105 (US); Steendam, Wilhelmus Johannes D., NL-4613 EE Bergen op Zoom (NL); Roovers, Wilhelmus Marinus M., NL-4651 WG Steenbergen (NL)
(74) Representative: Szary, Anne Catherine

(57) **Abstract**

Low juicing impact modified thermoplastic compositions and injection molding processes using the thermoplastic compositions. The thermoplastic compositions utilize as modifier an emulsion graft copolymer made using a latex emulsified with a polyacid. The compositions exhibit reduced tendencies to juice (plate out) during injection molding thereof. The compositions are useful in making impact strength enhanced thermoplastic articles.

## Description

The present invention relates to compositions impact modified with emulsion polymerized rubber graft copolymers, processes for making thereof, articles of said compositions, and methods of making the articles and more particularly relates to utilization of polyacids in the above compositions, processes, articles and methods.

### Description of the Related Art

Emulsion polymerization processes typically use a rubber latex which is stabilized against coagulation by the presence of surfactants. Typical surfactants are linear type monofatty acid surfactants such as tallow fatty acid having a linear chain averaging C₈-C₂₀ carbon atoms. Utilizing such surfactants in emulsion polymerization of impact modifying rubber graft copolymer undesirably results in juicing (plating out) of the surfactant during injection molding of thermoplastic compositions containing the rubber graft copolymer. These problems are especially prevalent in thermoplastic composition comprising (a) an aromatic polycarbonate resin and/or a polyalkylene terephthalate resin and (b) an impact modifying amount of the rubber graft copolymer, and optionally a rigid vinyl polymer due to the relatively high molding temperatures required for the thermoplastic composition to be formed into thermoplastic articles and due to the apparently poor solubility of a linear aliphatic monoacid surfactant in such compositions. When juicing of the surfactant is too high and excessive surfactant accumulates on the processing equipment, the undesired eventual effect can include plugging of the mold vents and creation of surface blemishes on the molded or extruded article. Reducing the surfactant level in preparing the rubber substrate and the rubber graft copolymer is not practical because poor latex stability and coagulum formation will result. High surfactant levels are particularly important in the formation of emulsion polymerized rubber graft copolymers, and consequently the present problems especially need solving in compositions, processes, articles and methods utilizing emulsion polymerized rubber graft copolymers. Additionally, the use of excessive soap levels can result in undesirable corrosion of molds, and excessive levels of such acids can undesirably lead to the giving off of volatiles which can accumulate on glass surfaces such as windshields and thereby undesirably cause fogging thereof if left uncleaned for an extended period of time. The emulsion may be coagulated with an acid to destabilize the emulsion. Salt of such acids may also be used for coagulation, but such salts can undesirably attack polycarbonate resins thereby reducing the molecular weight thereof, and can exhibit hygroscopic tendencies and relatively poorer base color characteristics, and the resulting resins can exhibit poor thermal stability during melt processing.

Accordingly, there is a need for reducing the amount of juicing during injection molding (or extrusion) of thermoplastic compositions containing a rubber graft copolymer and there is also a need to reduce fogging caused by such compositions.

### Sunmary of the Invention

The present invention involves thermoplastic resin compositions impact modified with an emulsion polymerized graft copolymer composition which is made utilizing a polyacid. The graft copolymer composition contains an amount of the polyacid. The graft copolymer composition is useful as an impact modifier for thermoplastic compositions. The thermoplastic compositions preferably contain amounts of an aromatic polycarbonate resin and/or a polyester (preferably a polyalkylene terephthalate resin). Upon injection molding (or extrusion) of the thermoplastic compositions to make molded articles, the compositions exhibit reduced levels of juicing and plate out due to the utilization of the polyacid rather than monoacid surfactants.

### Detailed Description of the Invention

The rubber graft copolymer useful in the impact modifier composition comprises (i) the rubber substrate, and (ii) a rigid polymeric superstrate portion grafted to the rubber substrate, and optionally a free rigid component. The rubber substrate is preferably present in the impact modifier composition (graft copolymer composition) at a level of from 10 to 90 percent by weight based on the total weight of the graft copolymer composition, more preferably from 40 to 85 percent by weight thereof, and more preferably 50 to 85 percent by weight thereof and most preferably from 65 to 85 percent by weight thereof; and the rigid superstrate (and optional ungrafted (free) rigid in combination) is preferably present at a level of from 10 to 90 percent by weight based on the total weight of the graft copolymer, preferably from 15 to 60 percent by weight thereof, more preferably from 15 to 50 percent by weight thereof, and most preferably from 15 to 35 percent by weight thereof. The free rigid portion, if present, is at about 0-50% by weight based on the total weight of the graft copolymer composition. The rubber substrate is a rubber having a Tg (glass transition temperature) of less than 0°C.

Examples of rubbery polymers for the substrate include: conjugated dienes, copolymers of a diene with styrene, acrylonitrile, methacrylonitrile or C₁ to C₈ alkyl acrylate which contain at least 50% (preferably at least 65% by weight) conjugated dienes, polyisoprene or mixtures thereof; olefin rubbers i.e. ethylene propylene copolymer (EPR) or ethylene propylene non-conjugated diene (EPDM); silicone rubbers; or C₁ or C₈ alkyl acrylate homopolymers or copolymers with butadiene and/or styrene. The acrylic polymer may also contain up to 5% of one or more polyfunctional crosslinking agents such as alkylenediol di(meth)acrylates, alkylenetriol tri(meth)acrylates, polyester di(meth)acrylates, divinylbenzene, trivinylbenzene, butadiene, isoprene and optionally graftable monomers such as, triallyl cyanurate, triallyl isocyanurate, allyl (meth)acrylate, diallyl maleate, diallyl fumarate, diallyl adipate, triallyl esters of citric acid or mixtures of these agents.

The diene rubbers may preferably be polybutadiene, polyisoprene and copolymers of butadiene with up to 35% by weight of comonomers such as styrene, acrylonitrile, methylmethacrylate or C₁-C₈-alkylacrylate which are produced by aqueous radical emulsion polymerisation and may optionally be cross-linked with di or tri-vinyl and/or allyl monomers or mixtures of such monomers or structures.

The rubbers may be cross-linked C₁-C₈-alkylacrylate, in particular C₂-C₈-alkylacrylate, optionally in admixture with up to 15% by weight of comonomers such as styrene, methylmethacrylate, butadiene, vinyl methyl ether or acrylonitrile and optionally up to 5% by weight of a polyfunctional crosslinking comonomer, e.g. divinylbenzene, glycolbis-acrylates, bisacrylamides, phosphoric acid triallylester, citric acid triallylester, allylesters of acrylic acid or methacrylic acid, triallylcyanurate, triallylisocyanurate. Also suitable are mixtures of diene- and alkylacrylate rubbers and rubbers which have a so-called core/sheath structure, e.g. a core of diene rubber and a sheath of acrylate or vice versa.

Specific conjugated diene monomers normally utilized in preparing the rubber substrate of the graft polymer are generically described by the following formula: 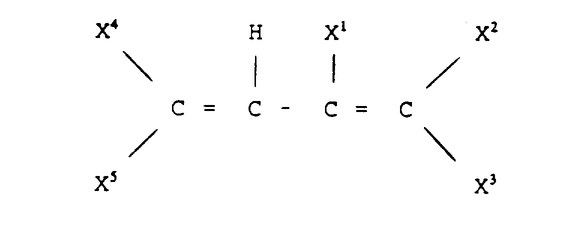 wherein each X¹, X², X³, X⁴ and X⁵ is individually selected from the group consisting of hydrogen, alkyl groups containing from one to five carbon atoms, chlorine or bromine. Examples of dienes that may be used are butadiene, isoprene, 1,3-heptadiene, methyl-1,3-pentadiene, 2,3-dimethylbutadiene, 2-ethyl-1,3-pentadiene 1,3- and 2,4-hexadienes, chloro and bromo substituted butadienes such as dichlorobutadiene, bromobutadiene, dibromobutadiene, mixtures thereof, and the like. A preferred conjugated diene is 1,3 butadiene.

The substrate polymer, as mentioned, is preferably a conjugated diene polymer such as polybutadiene, polyisoprene, or a copolymer, such as butadiene-styrene, butadiene-acrylonitrile, or the like. The rubbery polymeric substrate portion exhibits a glass transition temperature (Tg) of less than about 0°C.

Mixtures of one or more rubbery polymers previously described as substrate for preparing the graft polymers, or mixtures of one or more graft polymers disclosed herein may also be employed. Furthermore, the rubber may comprise either a block or random copolymer.

The rubber particle size used in this invention as measured by simple light transmission methods or capillary hydrodynamic chromatography (CHDF) may be described as having an average particle size by weight of: 0.05 to 1.2 microns, preferably 0.15 to 0.8 microns, for the emulsion based polymerized rubber latices. The rubber substrate is preferably a particulate, crosslinked diene or alkyl acrylate rubber, and preferably has a gel content greater than 50%.

Suitable superstrates include vinylidene polymers including homopolymers and copolymers.

Monovinylidene aromatic monomers (vinyl aromatic monomers) which may be employed in making of the superstrate include styrene, alpha-methyl styrene, halostyrenes i.e. dibromostyrene, mono or di alkyl, alkoxy or hydroxy substitute groups on the nuclear ring of the monovinylidene aromatic monomer i.e. vinyl toluene, vinylxylene, butylstyrene, parahydroxystyrene or methoxystyrene or mixtures thereof. The monovinylidenearomatic monomers utilized are generically described by the following formula: 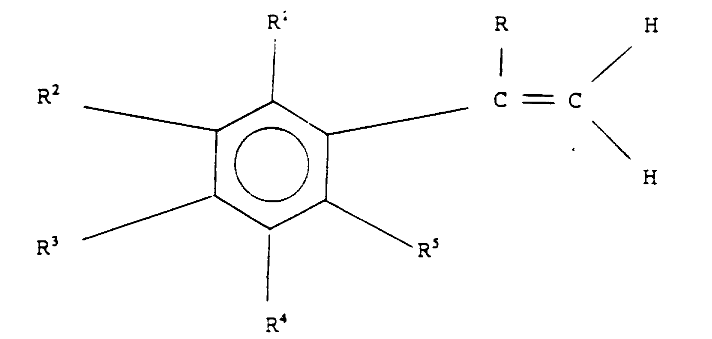 wherein each R¹, R², R³, R⁴ and R⁵ is individually selected from the group consisting of hydrogen, alkyl groups of 1 to 5 carbon atoms, cycloalkyl, aryl, alkaryl, aralkyl, alkoxy, aryloxy, and halogens. R is selected from the group consisting of hydrogen, alkyl groups of 1 to 5 carbon atoms and halogens such as bromine and chlorine. Examples of substituted vinylaromatic compounds include styrene, 4-methylstyrene, 3,5-diethylstyrene, 4-n-propylstyrene, α-methylstyrene, α-methyl vinyltoluene, α-chlorostyrene, α-bromostyrene, dichlorostyrene, dibromostyrene, tetrachlorostyrene, mixtures thereof and the like. The preferred monovinylidene aromatic monomers used are styrene and/or α-methylstyrene.

Monomers which may be used alone or in combination with the monovinylidene aromatic monomer includes acrylonitrile, methacrylonitrile, C₁ to C₈ alkyl or aryl substituted acrylate, C₁ to C₈ alkyl, aryl or haloaryl substituted methacrylate, acrylic acid, methacrylic acid, itaconic acid, acrylamide, N-substituted acrylamide or methacrylamide, maleic anhydride, maleimide, N-alkyl, aryl or haloaryl substituted maleimide, glycidyl (meth)acrylates, hydroxy alkyl (meth)acrylates or mixtures thereof. The unsaturated nitrile (acrylonitrile or substituted acrylonitrile) or acrylic acid esters are described generically by the following formula: 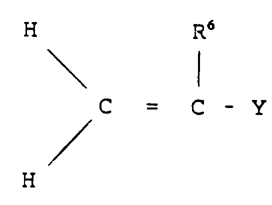 wherein R⁶ may be selected from the same group set out for R as previously defined and Y is selected from the group consisting of cyano and carbalkoxy groups wherein the alkoxy group of the carbalkoxy contains from one or about twelve carbon atoms. Examples of such monomers include acrylonitrile, ethacrylonitrile, methacrylonitrile, α-chloroacrylonitrile, α-bromoacrylonitrile, methyl acrylate, methyl methacrylate, ethyl acrylate, butyl acrylate, propylacrylate, isopropyl acrylate and mixtures thereof. The preferred unsaturated nitrile monomer is acrylonitrile and the preferred acrylic acid esters are ethyl acrylate and methyl methacrylate. It is also preferred that the acrylic acid esters, when included, are employed in combination with styrene or acrylonitrile.

The number average molecular weight of the grafted rigid superstrate is designed to be in the range of 10,000 to 350,000. The ratio of the first monomer to the second monomer may range from 100/0 to 50/50 preferably 85/15 to 60/40. Additional monomer(s) may optional replace 0 to 50% of one or both of the first and second monomers. Preferred graft superstrates include copolymers of styrene and acrylonitrile, copolymers of α-methylstyrene and acrylonitrile, and methylmethacrylate polymers or copolymers with up to 50% by weight of C₁-C₈ alkylacrylates, acrylonitrile or styrene.

These graft copolymers may be polymerized either by emulsion or combined processes such as emulsion-suspension or other emulsion techniques well known in the art. Furthermore, these rubber modified monovinylidene graft copolymers may be produced either by continuous, semibatch or batch processes.

Optionally the composition may include ungrafted (free) rigid phase portion which is a reaction product of the same monomers as set out for the superstrate, specifically vinyl aromatic monomers, unsaturated nitrile monomers, alkyl (alkyl) acrylate monomers and mixtures thereof. The free rigid phase is a term for the ungrafted rigid polymer. Preferably the free rigid phase and the grafted superstrate of the impact modifier composition are in respective ratios of 70:30 to 0:100, preferably from 60:40 to 20:80.

The preferred impact modifier compositions (graft copolymer compositions) are compositions which comprise amounts of a graft copolymer selected from the group consisting of acrylonitrile-butadiene-styrene graft copolymers, methylmethacrylate-butadiene-styrene graft copolymers (for example, methylmethacrylate-alkyl acrylate grafted to butadiene or styrene-butadiene rubber), methylmethacrylate-acrylonitrile-butadiene-styrene graft copolymers, methylmethacrylate-ethylacrylate onto polybutylacrylate, butylacrylate-styrene-acrylonitrile graft copolymers, butylacrylate-ethylacrylate-styrene graft copolymers, and acrylonitrile-ethylacrylate-styrene graft copolymers.

Specific examples of monovinylidene graft copolymers include but are not limited to the following: acrylonitrile-butadiene-styrene (ABS), acrylonitrile-styrene-butyl acrylate (ASA), methylmethacrylate-acrylonitrile-butadiene-styrene (MABS), acrylonitrile-ethylene-propylene-non-conjugated diene-styrene (AES), methylmethacrylate-butadiene-styrene and methylmethacrylate-butadiene.

Suitable vinylidene rigid polymers including homopolymers and copolymers used in this invention and prepared independently from the vinylidene graft copolymer include monovinylidene aromatic monomers (first monomer) as described previously and other comonomers (second monomer) also described earlier. The compositional ratio of the first monomer to the second may range from 100/0 to 50/50 preferably 85/15 to 60/40. Additional monomer(s) may optionally replace 0 to 50% of one or both of the first and second monomers.

The number average moleculate weight of the vinylidene rigid polymer is designed to be in the range of 10,000 to 350,000. Preferred vinylidene rigid polymers include copolymers of styrene and acrylonitrile, and homopolymers or copolymers of methylmethacrylate with up to 50% by weight of C₁ to C₈ alkylacrylates, acrylonitrile or styrene.

These vinylidene rigid polymers may be polymerized either by emulsion, emulsion-suspension, suspension or bulk techniques well known in the art. Furthermore, the rigid polymers may be produced either by continuous, semibatch or batch processes.

Antioxidants such as thio ester antioxidants and hindered phenols may be added to the impact modifier. The present invention preferably utilizes (adds to the emulsion) an antioxidant composition which contains an amount of polyacid surfactant. The antioxidant may be in the form of an antioxidant emulsion.

The polyacid is preferably present in the graft copolymer composition (impact modifier composition) at a level of from 0.25 to 5 percent by weight based on the total weight of the graft copolymer composition, more preferably present at a level of from 0.75 to 3.5 percent by weight thereof, more preferably is present at a level of from 1.5 to 2.75 percent by weight thereof. The polyacids have from 30 to 108 carbon atoms (C₃₀ to C₁₀₈), more preferably from C₃₂ to C₆₀. The polyacid component may be in the form of an admixture of polyacids, and is preferably substantially (>50 percent by weight) di and/or triacids, and more preferably substantially dimerized fatty acids and/or trimerized fatty acids. Preferably the polyacid in the form of carboxylate salts of the polyacid function are surfactants, emulsifiers or soaps. The dimerized fatty acid soaps that are useful in the emulsifying agents are soaps of polycarboxylic acids resulting from the polymerization of drying oil or semi-drying oil fatty acids. Suitable fatty acids include polyunsaturated fatty acids, such as linoleic acid, as well as mixtures of fatty acids that contain a substantial amount of polyunsaturated acids, such as soybean oil fatty acids and tall oil fatty acids. Such acids may be dimerized, for example, by heating them under pressure in the presence of an alkaline catalyst. The term "dimerized fatty acids" as used herein is intended to include the mixture of acids resulting from the dimerization of drying oil or semi-drying oil fatty acids. This mixture ordinarily includes a major amount of dimeric acids, trimeric acids and higher polymeric acids (and smaller amounts of unpolymerized (monomeric) acids). Examples include the following but are not limited to these structures: 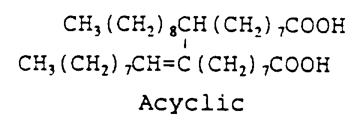 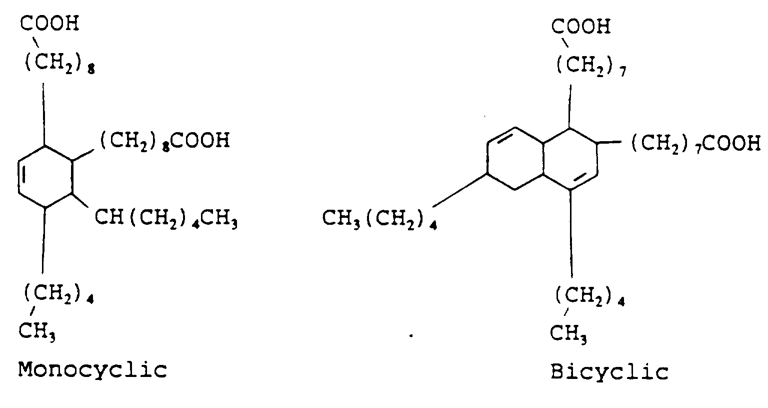 linear dimer acids: 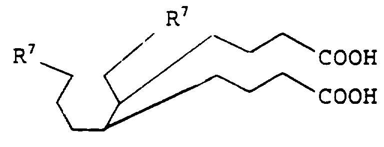 cyclic dimer acids: 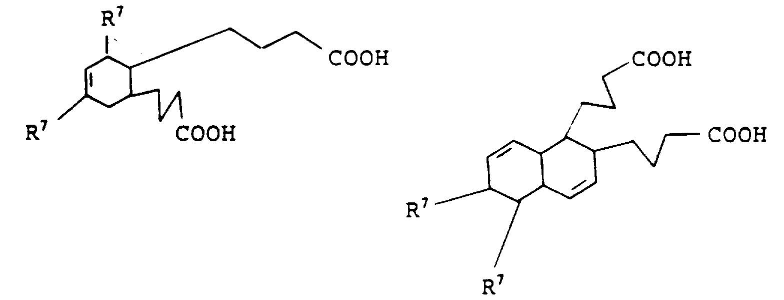 aromatic dimer acids: 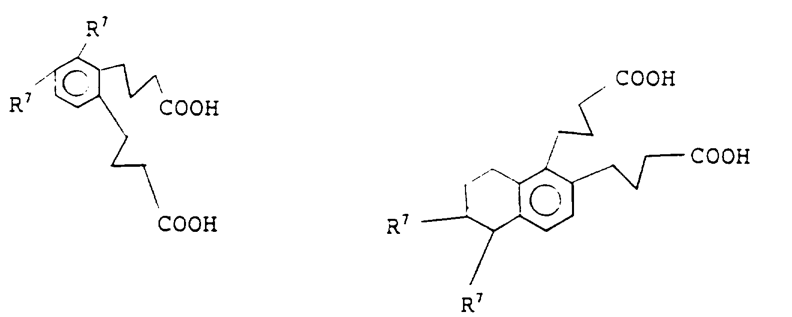 cyclic triacids 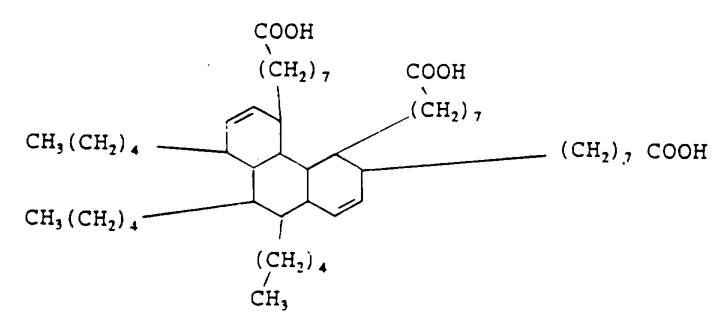 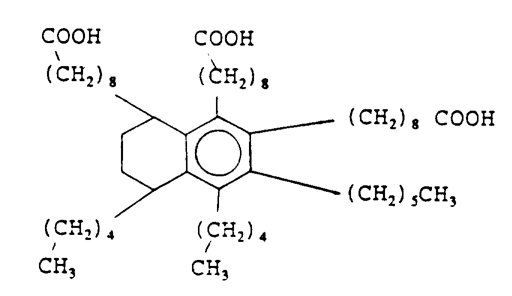 Each R⁷ is preferably a hydrogen or aliphatic hydrocarbon radical (alkyl) having from 1 to 18 carbon atoms and is more preferably of the formula (CH₂)ₓ wherein x is from 1 to 22. Dimer fatty acids may be formed by dimerizing fatty acids containing ethylenic linkages and from about 14 to about 22 carbon atoms in length. Monobasic acids which dimerize to form products as illustrated above include: oleic, elaidic, palmitoleic, linoleic, linolenic, licanic, arachidonic, erucic, clupanodonic, elaeostearic, etc. In commercial practice naturally occurring mixtures of these acids are generally employed for production of dimerized fatty acids. Such acids may be derived from sources such as tall oil fatty acids, tallow (animal grease) fatty acids and vegetable oils, e.g. soya, linseed, cottonseed, and other oils comprised of unsaturated fatty acid glycerides. In general, the dimerization is carried out by heating the monomeric acid at an elevated temperature, with or without a catalyst, while avoiding cracking and decarboxylation. U.S. patents 2,482,761, 2,664,429, 2,793,219, 2,793,220, 2,955,121, 3,076,003, 3,507,890 and 3,925,342 describe dimerization in further detail. Various types of dimerized fatty acids are available and the commercial products of dimerized fatty acids frequently contain trimerized fatty acids, which are tribasic acids formed as a by-product through the polymerization of three molecules of the fatty acids. Higher polybasic acids such as tetracarboxylic (C₇₂) acid and hexacarboxylic (C₁₀₈) acids may also be present. In addition, the commercial products may contain small percentages of isomerized monobasic acids or unreacted or fully saturated monomeric monobasic fatty acids which did not polymerize or which were not removed after the polymerization was carried out. The dimerized fatty acids employed to prepare the novel compositions of this invention preferably comprise a product having not more than about 70% tribasic acid and for very low non juicing characteristics not more than 10% monobasic acids. And preferably not more than 5% by weight monobasic acid based on the total weight of the polyacid component. The dimerized acid content is preferably at least 75% by weight based on the total weight of the surfactant. For improved color, the dimerized fatty acids may be partially or fully saturated by hydrogenation in a subsequent reaction step as described in Chapter 5 entitled "Hydrogenation of Fatty Acids" in the book "Fatty Acids in Industry" edited by Robert Johnson and Earle Fritz and published by Marcel Dekker, Inc. NY, NY. All dimer acids are liquid at 25°C even though their number average molecular weight is typically above 500 (for example, about 560). The dimerization process may produce a mixture of monoacids, diacids, triacids, and higher polymeric acids. Preferably more than about half of the dimerized acid is comprised of isomers with acyclic/cyclic aliphatic or aromatic structures. The cyclic structures include monocyclic and bicyclic aliphatic and aromatic structures. The cyclic structures generally form during the dimerization process, but their mode of formation is not critical to this invention. It is further more important to note that there is no rosin acid, abietic acid or derivatives thereof present in these compositions in part because such materials as abietic acid can be undesirably volatile and can result in juicing.

Preferred polyacids are acyclic/cyclic aliphatic polyacids and cyclic aromatic polyacids. The polyacid is preferably a high molecular weight polyacid having from 30 to 108 carbon atoms and preferred 32 to 60 carbon atoms. Preferably the polyacid is soluble and/or miscible in the thermoplastic compositions.

The impact modified thermoplastic composition comprises (i) a thermoplastic resin and (ii) the impact modifier composition of this invention. The thermoplastic resin preferably has a high melt temperature (at least 350°F, preferably between 450°F and 800°F), and is preferably selected from SAN and ABS resins, polycarbonate resins, polyphenylene ethers, polyester resin, polyetherimide resins, polysulfones, polyacrylates and polyphenylene sulfides, polyamides, and mixtures thereof such as PC/PBT blends.

The thermoplastic composition preferably comprises a vinyl aromatic-unsaturated nitrile rubber graft copolymer and/or a vinyl copolymer resin and/or a polyalkylene terephthalate (such as polybutylene terephthalate) resin and/or a bisphenol A polycarbonate.

The aromatic polycarbonate resin is preferably present in the thermoplastic composition at a level of from 0 to 97 percent by weight based on the total weight of the thermoplastic composition, more preferably is present at a level of from 50 to 97 percent by weight thereof, and most preferably is present at a level of from 55 to 85 percent by weight thereof. The vinyl copolymer is preferably present at a level of from 0 to 35 percent by weight based on the total weight of the thermoplastic composition, more preferably is present at a level of from 10 to 30 percent by weight thereof, and most preferably is present at a level of from 15 to 25 percent by weight thereof; the impact modifier composition is preferably present in the thermoplastic composition at a level of from 3 to 50 percent by weight based on the total weight of the thermoplastic composition, more preferably from 10 to 30 percent by weight based on the total weight of the thermoplastic composition, and more preferably from 10 to 20 percent by weight based on the total weight of the thermoplastic composition. Preferably the impact modifier composition is present at a level in the thermoplastic composition such that the level of the rubber substrate in the thermoplastic composition is between 3 and 15 percent by weight based on the total weight of the thermoplastic composition, and more preferably between 4 and 10 percent by weight thereof.

Preferably the polyalkylene terephthalate resin is present in the thermoplastic composition at a level of from 0 to 97 percent by weight based on the total weight of the thermoplastic composition, more preferably at a level of from 30 to 97 percent by weight thereof, even more preferably at a level of from 15 to 85 percent by weight based on the total weight of the thermoplastic composition, more preferably at a level of from 20 to 70 percent by weight based on the total weight of the thermoplastic composition.

Preferably the aromatic polycarbonate resin and the polyalkylene terephthalate resin are present in the thermoplastic composition at a combined level of from 55 to 95 percent by weight based on the total weight of the thermoplastic composition, more preferably at a level of from 65 to 85 percent by weight based on the total weight of the thermoplastic composition. The weight ratio of aromatic polycarbonate resin to polyalkylene terephthalate resin may range from 80:20 to 20:80. The thermoplastic composition preferably has a total rubber content of from 3 to 45 percent by weight, more preferably from 3 to 25 percent by weight based on the total weight of the thermoplastic composition, and most preferably from 5 to 15 percent by weight thereof.

The thermoplastic composition utilizing a polyester resin without an aromatic polycarbonate resin, preferably comprises (a) a polyester resin present at a level of from 30 to 97 percent by weight based on the total weight of the composition and more preferably 40 to 60 percent by weight thereof, (b) an impact modifier composition present at a level of from 5 to 35 percent by weight based on the total weight of the composition, and more preferably from 10 to 30 percent by weight thereof and (c) a vinyl non-graft rigid vinylidene homopolymer or copolymer present at a level of from 0 to 70 percent by weight, more preferably 5 to 70 percent by weight, based on the total weight of the composition and even more preferably 10 to 40 percent by weight thereof.

The process of this invention involves emulsion polymerizing a diene rubber substrate with an ethylenically unsaturated compound selected from the group of monovinylidene aromatic monomers, unsaturated nitrile monomers, alkyl (alka) acrylate monomers, and mixtures thereof, the polymerization being in the presence of a polyacid surfactant to deter formation of coagulum, the polymerization forming an impact modifier composition containing the polyacid. Preferably the thermoplastic compositions obtained pursuant to the present invention when injection molded pursuant to the following conditions: a 5 oz. capacity molding machine with a clamp force of 150 tons; a 4" x 6" x 0.125" removable mold cavity insert; a mold temperature of 80°F; a melt stock temperature of 575°F; an injection speed of 1.0 inch/second; a screw speed of 75 RPM; a screw back pressure of 100 psi; a cycle time of approximately 32 seconds; a short shot equaling 95% of cavity capacity; an accumulation of mold deposit resulting from 150 molding cycles; removing the cavity from the molding machine and washing the removable mold cavity with chloroform to collect the residue in a 20 mil scintillation vial; weighing a tarred scintillation vial to determine the amount of accumulated residue in milligrams after carefully removing the chloroform; analyzing the contents by Fourier Transform InfraRed (FTIR), high pressure liquid chromatography (HPLC), etc. yields a juicing level of less than 12 mgs, more preferably less than 9 mgs, and most preferably less than 7 mgs after 150 short shots as illustrated in the Tables 1 and 2. The process further involves injection molding (or extruding) a thermoplastic composition containing the impact modifier composition to form a molded article. The thermoplastic compositions made by this present process exhibit reduced levels of juicing compared to those which contain a monoacid surfactant. The injection molding process typically occurs at a temperature of at least 500°F, more typically at temperatures of between 515 and 575°F, and most preferably at temperatures between 525 and 550°F. These relatively high injection molding temperatures contribute to the problems associated with juicing and plate out of linear monoacid surfactants, and the present polyacid surfactants effectively resist such high levels of juicing and plate out.

Polycarbonate resins (including polyester carbonates), suitable for use in this invention, can comprise non-aromatic as well as aromatic forms. With respect to aromatic polycarbonate resins, these can be made by those skilled in this art or can be obtained from a variety of commercial sources. They may be prepared by reacting a dihydric phenol with a carbonate precursor, such as phosgene, a haloformate or a carbonate ester. Typically, they will have recurring structural units of the formula: 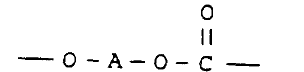 wherein A is a divalent aromatic radical of the dihydric phenol employed in the polymer producing reaction. Preferably, the aromatic carbonate polymers have an intrinsic viscosity ranging from 0.30 to 1.0 dl/g (measured in methylene chloride at 25° C.). By dihydric phenols is meant mononuclear or polynuclear aromatic compounds containing two hydroxy radicals, each of which is attached to a carbon atom of an aromatic nucleus. Typically, dihydric phenols include 2,2-bis-(4-hydroxyphenyl)propane; 2,2-bis-(3,5-dimethyl-4-hydroxyphenyl) propane; 4,4'-dihydroxydiphenyl ether; bis (2-hydroxyphenyl) methane, mixtures thereof and the like. The preferred aromatic carbonate polymer is a homopolymer derived from 2,2-bis(4-hydroxyphenyl) propane(bisphenol-A).

Poly(ester carbonates) for use in the invention are known and can be obtained commercially. Generally, they are copolyesters comprising recurring carbonate groups 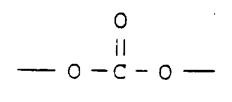 carboxylate groups 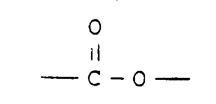 and aromatic carbocyclic groups in the linear polymer chain, in which at least some of the carboxylate groups and at least some of the carbonate groups are bonded directly to ring carbon atoms of the aromatic carbocyclic groups. These poly(ester carbonates) in general, are prepared by reacting a difunctional carboxylic acid, such as phthalic acid, isophtalic acid, terephthalic acid, homophthalic acid, o-, m-, and p-phenylenediacetic acid, the polynuclear aromatic acids, such as diphenic acid, 1,4-naphthalic acid, mixtures of any of the foregoing, and the like, with a dihydric phenol and a carbonate precursor, of the types described above. A particularly useful poly(ester carbonate) is derived from bisphenol-A, isophthalic acid, terephthalic acid, or a mixture of isophthalic acid and terephthalic acid, or the reactive derivatives of these acids such as terephthaloyl dichloride, or a mixture thereof, and phosgene. The molar proportions of dihydroxy diaryl units can range from 1:0.30-0.80:0.70-0.20 and the molar range of terephthalate units to isophthalate units can range from 9:1 to 2:8 in this preferred family of resins.

Polyesters suitable for use are generally derived from an aliphatic or cycloaliphatic diol, or mixtures thereof, containing from 2 to about 10 carbon atoms and at least one aromatic dicarboxylic acid. Preferred polyesters are derived from an aliphatic diol and an aromatic dicarboxylic acid and have repeated units of the following general formula: 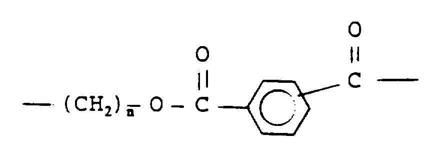 wherein n is an integer of from 2 to 4. The most preferred polyesters are poly(alkylene terephthalates such as poly(butylene terephthalate) and poly(ethylene terephthalate).

Also contemplated herein are the above polyesters with minor amounts, e.g., from 0.5 to about 2 percent by weight, of units derived from aliphatic acid and/or aliphatic polyols to form copolyesters. The aliphatic polyols include glycols, such as poly(ethylene glycol). All such polyesters can be made following the teachings of, for example, U.S. Pat. Nos. 2,465,319 and 3,047,539.

The polyesters which are derived from a cycloaliphatic diol and an aromatic dicarboxylic acid are prepared, for example, by condensing either the cis- or trans-isomer (or mixtures thereof) of, for example, 1,4-cyclohexanedimethanol with an aromatic diacarboxylic acid as to produce a polyester having recurring units of the following formula: 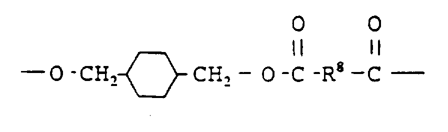 wherein the cyclohexane ring is selected from the cis- and trans-isomers thereof and R⁸ represents an aryl radical containing 6 to 20 carbon atoms and which is the decarboxylated residue derived from an aromatic dicarboxylic acid.

Examples of aromatic dicarboxylic acids represented by the decarboxylated residue R are isophthalic or terephthalic acid, 1,2-di(p-carboxypheny) ethane, 4,4'-dicarboxydiphenyl ether, etc., and mixtures of these. All of these acids contain at least one aromatic nucleus. Acids containing fused rings can also be present, such as in 1,4- or 1,5-naphthalenedicarboxylic acids. The preferred dicarboxylic acids are terephthalic acid or a mixture of terephthalic and isophthalic acids.

Another preferred polyester may be derived from the reaction of either the cis- or trans-isomer (or a mixture thereof of 1,4-cyclohexanedimethanol with a mixture of isophthalic and terephthalic acids. Such a polyester would have repeating units of the formula:

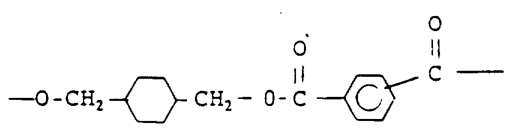

Still another preferred polyester is a copolyester derived from a cyclohexanedimethanol, an alkylene glycol and an aromatic dicarboxylic acid. These copolyesters are prepared by condensing either the cis- or trans-isomer (or mixtures thereof) of, for example, 1,4-cyclohexanedimethanol and an alkylene glycol with an aromatic diacarboxylic acid so as to produce a copolyester having units of the following formula: 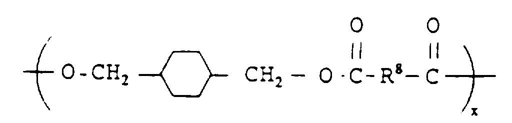 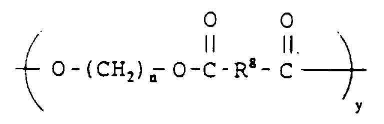 wherein the cyclohexane ring is selected from the cis- and trans-isomers thereof, R⁸ is as previously defined, n is an integer of 2 to 4, the x units comprise from about 10 to about 90 percent by weight and the y units comprise from about 90 to about 10 percent by weight.

Such a preferred copolyester may be derived from the reaction of either the cis- or trans-isomer (or mixtures thereof) of 1,4-cyclohexanedimethanol and ethylene glycol with terephthalic acid in a molar ratio of 1:2:3. These copolyesters have repeating units of the following formula: 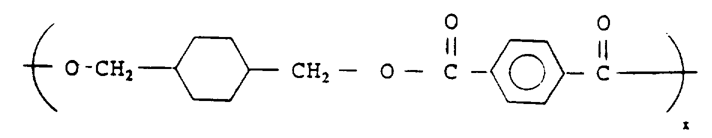 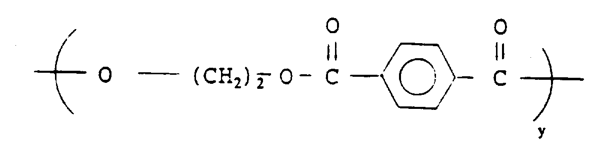 wherein x and y are as previously defined.

The polyesters described herein are either commercially available or can be produced by methods well known in the art, such as those set forth in, for example, U.S. Pat. No. 2,901,466.

The polyesters used herein have an intrinsic viscosity of from about 0.4 to about 2.0 dl/g as measured in a 60:40 phenol:tetrachloroethane mixture or similar solvent at 23°-30° C.

All ABS (graft copolymer) resin examples and references for this study were coagulated with a mineral acid (H₂SO₄). However, organic acids may also be used in place of the mineral acid.

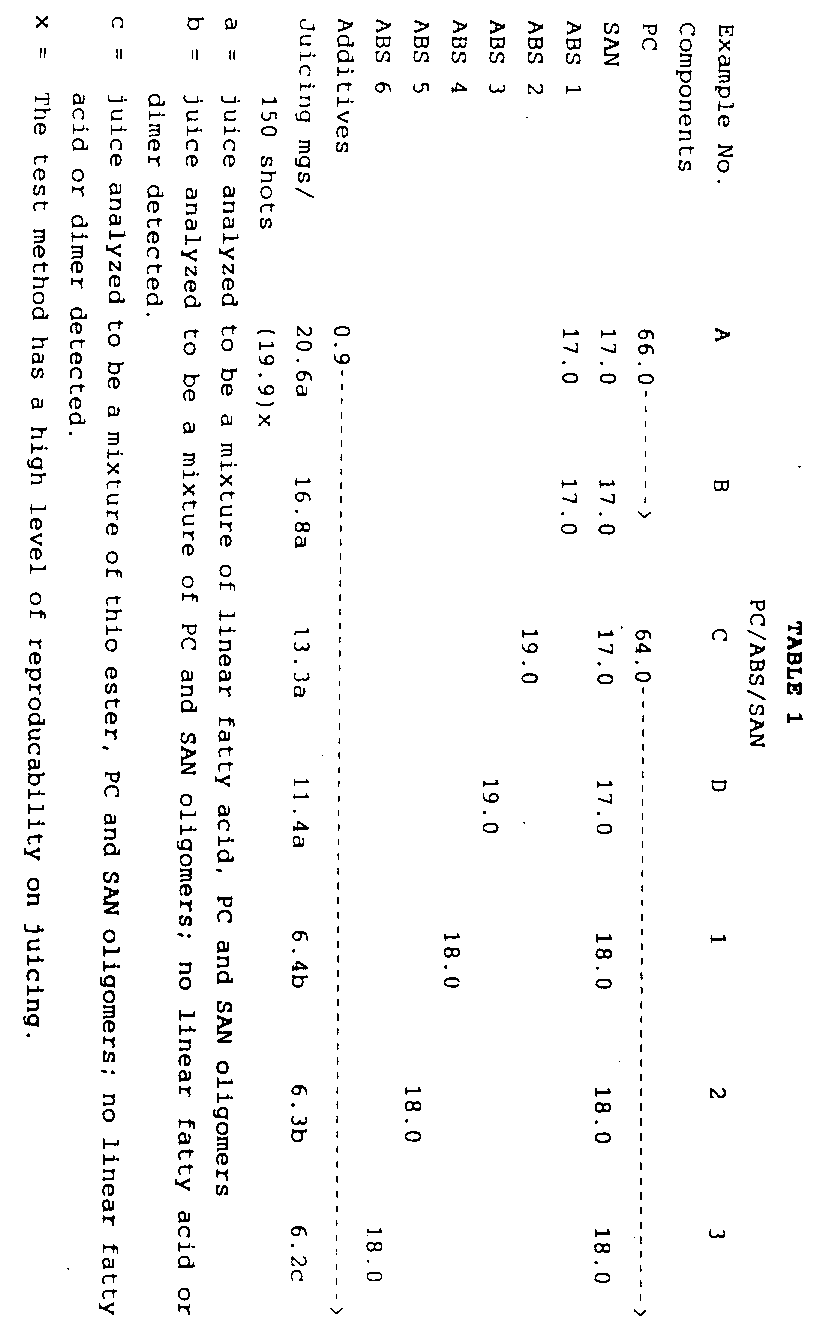

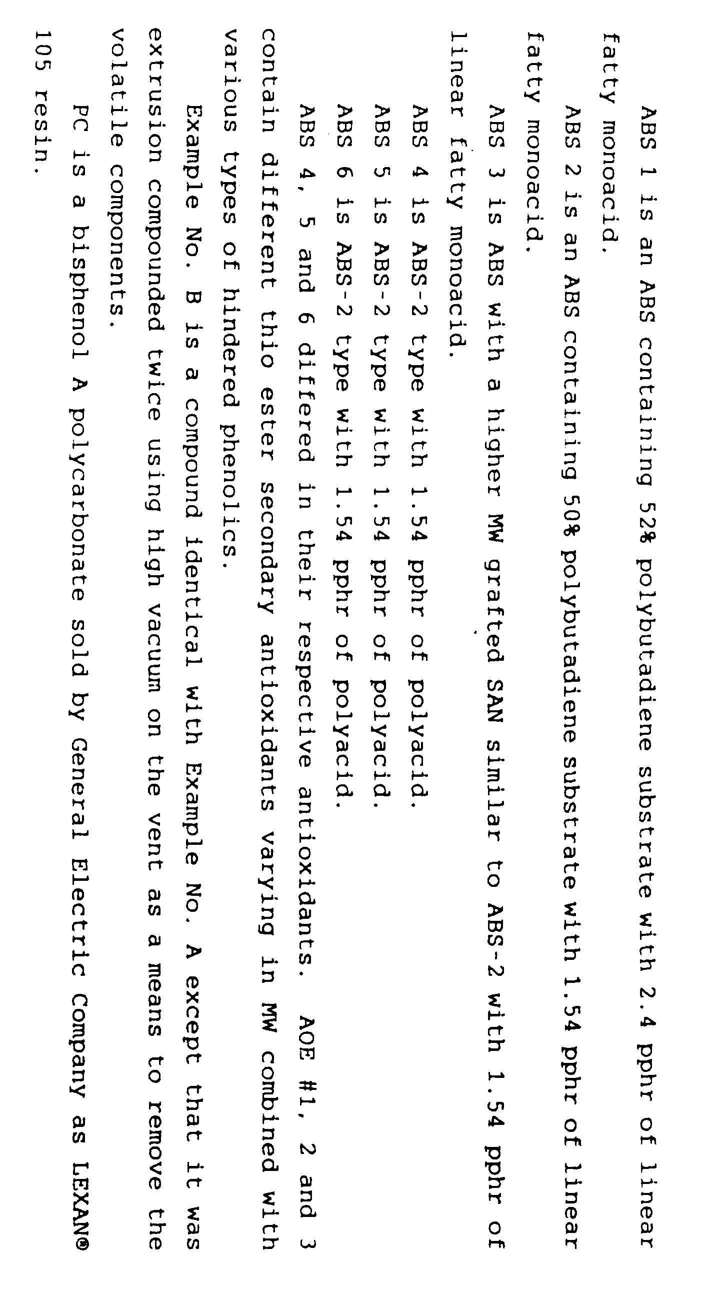

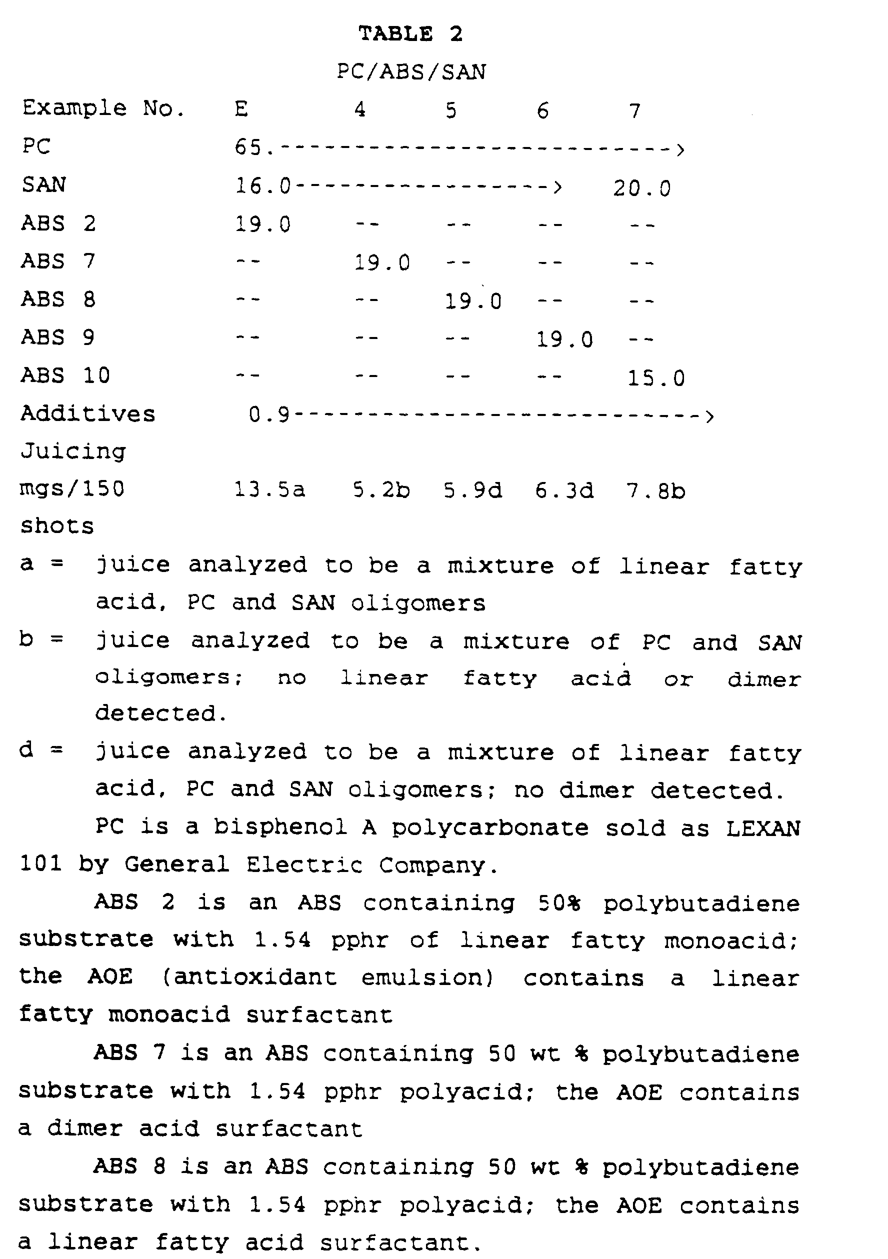

Each ABS had 50% by weight butadiene rubber.

ABS 9 is an ABS containing 50% substrate with .97 pphr polyacid polybutadiene substrate; the AOE contains a linear fatty acid surfactant

ABS 10 has 65% polybutadiene substrate and 2.42 pphr polyacid; the AOE contains a dimer acid surfactant.

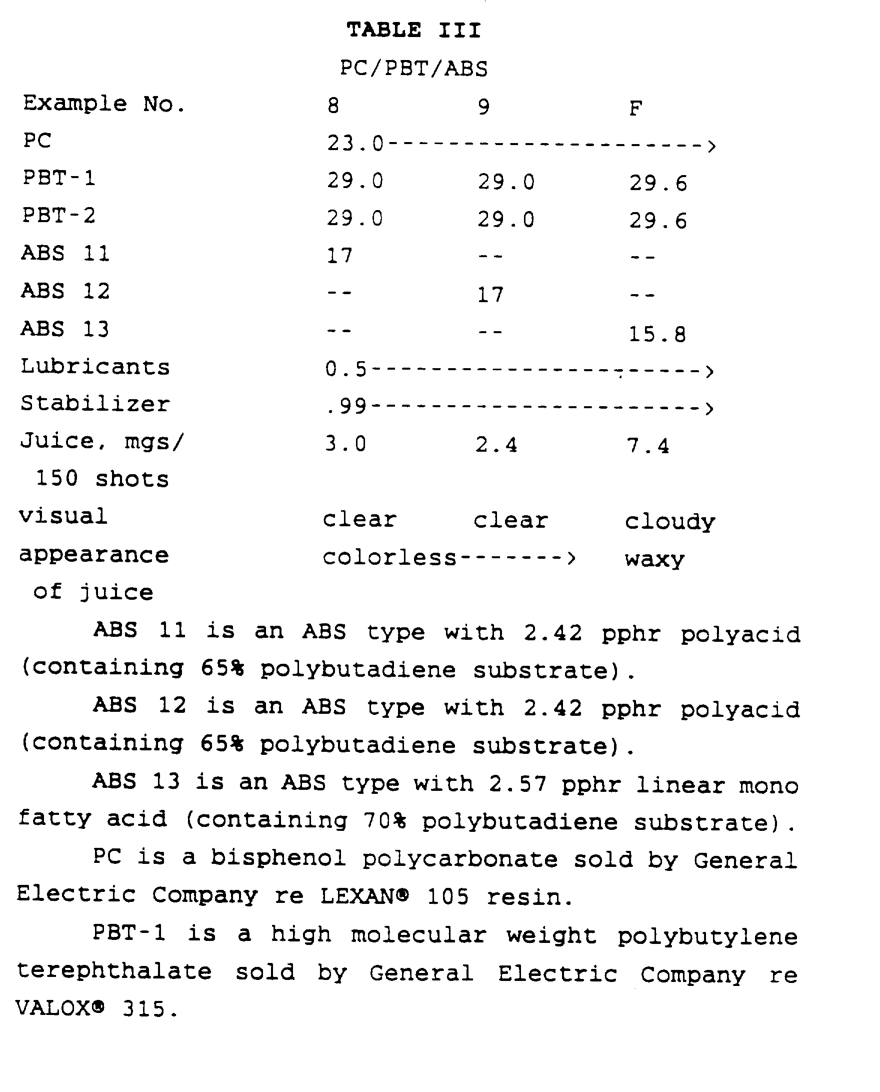

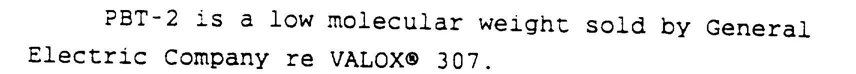

Examples A-F are comparative examples.

## Claims

1. A process for making a thermoplastic article, said process comprising:
(a) emulsion polymerizing a rubber substrate having a Tg of less than 0°C grafted upon with an ethylically unsaturated compound selected from the group monovinyl aromatic monomers, unsaturated nitrile monomers, alkyl (alkyl) acrylate monomers, and mixtures thereof, said polymerization being in the presence of a C₃₀ to C₁₀₈ polyacid, said polymerization forming a graft copolymer composition containing said polyacid,
(b) injection molding a thermoplastic composition comprising said graft copolymer composition to form said article.

2. The process of Claim 1 wherein said thermoplastic composition comprises an aromatic polycarbonate resin.

3. The process of Claim 1 wherein said thermoplastic composition comprises a polyalkylene terephthalate resin.

4. The process of Claim 1 wherein said polyacid is selected from the group consisting of aliphatic and cycloaromatic polyacids.

5. An impact modified, low juicing thermoplastic composition comprising:
(a) an aromatic polycarbonate resin present at a level of from 50 to 97 percent by weight based on the total weight of the composition;
(b) a vinyl aromatic-unsaturated nitrile copolymer present at a level of from 0 to 35 percent by weight based on the total weight of the composition; and
(c) a graft copolymer present at a level of from 3 to 50 percent by weight based on the total weight of the composition, said graft copolymer comprising:
(i) a rubber substrate with a Tg of less than 0°C present at a level of from 40 to 90 weight percent based on the total weight of the graft copolymer;
(ii) a superstrate grafted to said substrate, said superstrate with a Tg greater than 20°C being derived from a compound selected from the group consisting of vinyl aromatics, unsaturated nitriles, alkyl (alkyl) acrylates and mixtures thereof; and
(iii) a polyacid selected from the group consisting of C₃₀ to C₁₀₈ polyacids.

6. The thermoplastic composition of Claim 5 wherein said rubber substrate is a diene rubber substrate, said substrate being present at a level of from 50 to 85 percent by weight based on the total weight of the graft copolymer, and said polyacid being selected from the group consisting of aliphatic and cycloaromatic C₃₀ to C₁₀₈ polyacids.

7. An impact modified, low juicing thermoplastic composition comprising:
(a) an aromatic polycarbonate resin,
(b) a polyalkylene terephthalate resin, wherein said aromatic polycarbonate resin and said polyalkylene terephthalate resin are present in combinate at a level of from 55 to 90 percent by weight based on the total weight of said thermoplastic composition; and
(c) a graft copolymer composition comprising:
(i) a rubber substrate with a Tg of less that 0°C present at a level of from 20 to 85 weight percent based on the total weight of the graft copolymer composition;
(ii) a superstrate grafted to said substrate, said superstrate being derived from a compound with a Tg greater than 20°C selected from the group consisting of vinyl aromatics, unsaturated nitrile, alkyl (alkyl) acrylates and mixtures thereof; and
(iii) a polyacid selected from the group consisting of C₃₀ to C₁₀₈ polyacid.

8. The composition of Claim 7 wherein said aromatic polycarbonate resin is a bisphenol A polycarbonate resin, and said polyalkylene terephthalate resin is a polybutylene terephthalate resin.

9. An impact modified, low juicing thermoplastic composition comprising:
(a) an polyalkylene terephthalate resin present at a level of from 30 to 97 percent by weight based on the total weight of the composition;
(b) a vinyl aromatic-unsaturated nitrile copolymer present at a level of from 0 to 50 percent by weight based on the total weight of the composition; and
(c) a graft copolymer composition present at a level of from 3 to 50 percent by weight based on the total weight of the thermoplastic composition, said graft copolymer composition comprising:
(i) a rubber substrate present at a level of from 40 to 90 weight percent based on the total weight of the graft copolymer composition;
(ii) a superstrate grafted to said substrate, said superstrate being derived from a compound selected from the group consisting of vinyl aromatics, unsaturated nitrile, alkyl (alka) acrylates and mixtures thereof; and
(iii) a polyacid selected from the group consisting of C₃₀ to C₁₀₈ polyacids.

10. The composition of Claim 9 wherein said polyacid is a cycloaromatic polyacid or an aliphatic polyacid.
